# EUROPÄISCHE PATENTSCHRIFT

(11) **EP 2 239 155 B1**
(45) Veröffentlichungstag und Bekanntmachung des Hinweises auf die Patenterteilung: **06.06.2012**
(21) Anmeldenummer: 10001003.2
(22) Anmeldetag: 02.02.2010
(51) Int. Cl.: B60G 9/00, B60B 35/04

(54) **Achskonstruktion für ein Fahrzeug, insbesondere für ein Nutzfahrzeug**
Axle construction for a vehicle, in particular a commercial vehicle
Structure d'essieu pour un véhicule, notamment pour un véhicule utilitaire

(30) Priorität: 11.04.2009 DE 102009017287
(43) Veröffentlichungstag der Anmeldung: 13.10.2010
(73) Patentinhaber: MAN Truck & Bus AG, 80995 München (DE)
(72) Erfinder: Zimmer, Martin, 81667 München (DE); Sirch, Robert, 82223 Eichenau (DE)

(56) Entgegenhaltungen:
- WO-A1-2009/023020
- CH-A- 299 898
- FR-A- 564 991
- US-A- 1 761 516
- US-A- 2 349 373
- US-A- 2 611 656

## Beschreibung

Die Erfindung betrifft eine Achskonstruktion an einem Fahrzeug, insbesondere an einem Nutzfahrzeug, nach dem Oberbegriff des Anspruchs 1.

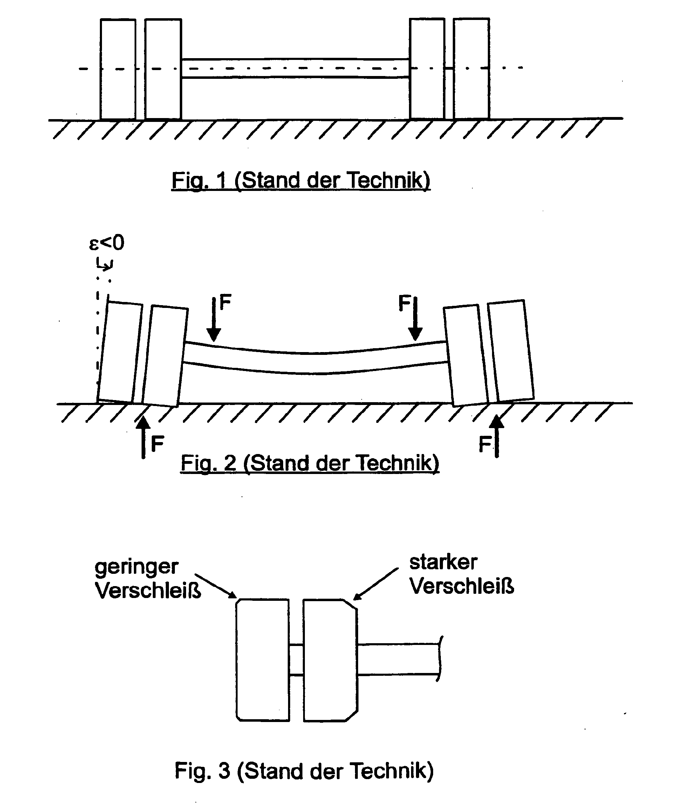

Der Einsatz von Starrachsen in Verbindung mit Nutzfahrzeugen, wie zum Beispiel Lastkraftwagen oder Bussen, ist allgemein bekannt. Eine derartige Starrachse verbindet die Räder einer Achse und hält die Spur und den Sturz konstant. Besonders vorteilhaft ist diesbezüglich eine Starrachse mit einer Zwillingsbereifung oder einer sehr breiten Einzelbereifung, da Radlastschwankungen, die von Querkräften hervorgerufen werden, mittels einer derartigen Zwillingsbereifung beziehungsweise einer derartigen breiten Einzelbereifung relativ gering sind. Konkret werden derartige zwillingsbereifte oder breit einzelbereifte ungelenkte Starrachsen, wie sie in schweren Nutzfahrzeugen Verwendung finden, ohne Sturz konstruiert und gefertigt. Ohne eine Belastung stehen die rechte und die linke Radebene dabei parallel zueinander, wie dies in der den Stand der Technik zeigenden Figur 1 schematisch und beispielhaft dargestellt ist. Durch eine Belastung der Starrachse und eine Krafteinleitung der Federung innerhalb der Räder entsteht ein Moment, welches eine elastische Verformung einer Achsbrücke der Starrachse zur Folge hat und somit einen negativen Sturz der Zwillingsbereifung zur Folge hat, wie dies schematisch in der Figur 2 dargestellt ist. Daraus resultiert ein ungünstiges Abrollverhalten der Räder, welches insbesondere bei breiter Bereifung oder Zwillingsbereifung zu einem ungleichmäßigen Riefenverschleiß an den Radinnenseiten bzw. den inneren Rädern einer Zwillingsbereifung führt, was die Standzeit der Bereifung insgesamt reduziert. Zusätzlich erzeugt der negative Sturz eine Biegewechselbelastung im Bereich der axialen Antriebswellen beziehungsweise Steckachsen von als Antriebsachsen ausgebildeten Starrachsen. In der Fig. 3 ist lediglich äußerst schematisch anhand einer Zwillingsbereifung der ungleichmäßige Riefenverschleiß zwischen dem Innenrad und dem Außenrad einer Zwillingsbereifung schematisch dargestellt.

Aus der DE 41 02 313 A1 ist bereits eine Radaufhängung für zwillingsbereifte Nutzfahrzeuge bekannt, mit der das Problem starker Radlastschwankungen in Folge Sturzveränderungen relativ zur Fahrbahn behoben werden soll. Konkret ist hierzu vorgesehen, dass die Radaufhängung einen zusätzlichen Freiheitsgrad aufweist, welcher Freiheitsgrad dem Radträger eine Schwenkbewegung in einer Fahrzeugquerebene erlaubt, und zwar um eine in Fahrzeuglängsrichtung verlaufende Drehachse. Diese Drehachse verläuft etwa in einer Längsmittelebene des Rades und liegt etwa in Höhe der Fahrbahnebene. Der Radträger ist schwenkbeweglich an kreisförmigen Gleitbahnen geführt, die an Krümmungszentren die ideellen Führungsgelenke bilden, wobei eine die ideellen Führungsgelenke verbindende Gerade die Drehachse darstellt. Die Gleitbahnen sind unmittelbar oder über Führungslenker am Fahrzeugrahmen befestigt, wobei der Radtträger über Führungslager längs der Gleitbahnen geführt ist.

Die US 2,349 373 beschreibt eine Achskonstruktion für Nutzfahrzeuge, Anhänger von Nutzfahrzeugen oder dergleichen mit einer Starrachse, die ausweislich der dortigen Figur 2 in Verbindung mit einem unbeladenen Fahrzeug einen positiven Radsturzwinkel zeigt. Um den vorgegebenen Radsturzwinkel auch bei höherer bis maximaler Belastung möglichst beibehalten zu können, schlägt die US 2,349,373 vor, den Achskörper der Starrachse mit einer schalenartigen Versteifungsstruktur mitsamt einer Versteifungsrippe zu versehen, mittels welcher die Achsendeformation vermieden werden soll. Ein derartiger Aufbau bewirkt, dass bei nahezu allen denkbaren Beladungssituationen ein im Wesentlichen stets gleicher positiver Radsturzwinkel ausgebildet ist, der jedoch insbesondere den Anforderungen an das Spurverhalten moderner luftbereifter Nutzfahrzeuge nicht gerecht wird.

Die CH 299898 beschreibt pauschal, dass Radachsen ein Achssturz gegeben werden kann, damit die Radebenen bei belasteten Radachsen ungefähr zueinander parallel stehen. Um einen solche Radachse herzustellen, soll die Achse aus einem Rohling geschmiedet, dann vergütet und dann hierauf erst so bearbeitet werden, dass sie noch keinen Sturz besitzt, wonach sie auf eine Temperatur unterhalb der Auskühltemperatur gebracht und über die Elastizitätsgrenze hinaus so verformt wird, dass sie Sturz erhält.

Weiter beschreibt die WO 2009/023020 A1 eine Starrachse, die nach einem längeren Einsatz einen unerwünschten negativen Radsturzwinkel aufweist, zur Reparatur ausgebaut und dann mechanisch in die entgegengesetzte Richtung gebogen werden kann. Um dies zu vermeiden, wird vorgeschlagen, über mittig und seitig an einem Achskörper angebrachte Gewindestangen eine solche Vorspannkraft auf den Achskörper auszuüben, dass dieser einer Abbiegung nach unten im Wesentlichen entgegenwirkt.

Demgegenüber ist es Aufgabe der vorliegenden Erfindung, eine Achskonstruktion an einem Fahrzeug insbesondere an einem Nutzfahrzeug, zur Verfügung zu stellen, mittels der neben einer längeren Standzeit der Bereifung und damit einem geringeren Verschleiß auch für definierte hohe Belastungssituationen eine geeignete Seitenführungskraft zur Verfügung gestellt wird.

Diese Aufgabe wird gelöst mit den Merkmalen des Anspruchs 1. Vorteilhafte Ausgestaltungen hierzu sind Gegenstand der darauf rückbezogenen Unteransprüche.

Gemäß Anspruch 1 ist eine Achskonstruktion für ein Fahrzeug, insbesondere für ein Nutzfahrzeug, mit einer ungelenkten Starrachse vorgesehen, wobei die ungelenkte Starrachse im nicht am Fahrzeug montierten und damit komplett unbelasteten Zustand so ausgebildet ist, dass die Fahrzeugräder mit einem definierten positiven Radsturzwinkel an der ungelenkten Starrachse angeordnet sind. Ein derartiger voreingestellter positiver Radsturzwinkel wird in der vorliegenden Erfindung als Konstruktionssturz bezeichnet und liegt gemäß einer besonders bevorzugten konkreten Ausgestaltung in einem bevorzugten Winkelbereich von größer 0,0° bis 1 °, höchst bevorzugt in einem Winkelbereich von größer 0° bis 0,5°. Mit einer derartigen Achskonstruktion kann im belasteten Zustand der ungelenkten Starrachse ein definierter Sturz eingestellt werden, zum Beispiel dergestalt, dass die Fahrzeugräder bei am Fahrzeug montierter Starrachse sowie im unbeladenen Zustand des Fahrzeuges mit einem nach wie vor positiven Radsturzwinkel am Fahrzeug angeordnet sind. Erfindungsgemäß liegt ein derartiger, in der vorliegenden Erfindung als Grundsturz bezeichneter Radsturzwinkel in einem Winkelbereich von größer 0° bis 0,5°, höchst bevorzugt in einem Winkelbereich von größer 0° bis 0,3°.Weiter kann mit einer derartigen erfindungsgemäßen Achskonstruktion zum Beispiel vorgegeben werden, dass bei einer maximal zulässigen Fahrzeugbeladung die Starrachse so elastisch verformt ist, dass die Fahrzeugräder mit einem gegenüber dem Grundsturz in Richtung negativer Radsturzwinkel veränderten Radsturzwinkel angeordnet sind. Ein derartiger veränderter Radsturzwinkel wird in der vorliegenden Erfindung als Belastungssturz bezeichnet. Die Winkelwerte dieses Belastungsturzes liegen erfindungsgemäß in einem Bereich von -0,3° bis 0°. Zudem ist erfindungsgemäß vorgesehen, dass die ungelenkte Starrachse als angetriebene Starrachse mit axialen Antriebswellen ausgebildet ist.

Mit einer derartigen erfindungsgemäßen Voreinstellung eines positiven Radsturzwinkels an einer ungelenkten Starrachse kann somit auf einfache Weise eine längere Standzeit der Bereifung aufgrund eines geringeren Reifenverschleißes erzielt werden, da der positive Radsturzwinkel an der Starrachse je nach Fahrzeugtyp und Belastungssituation auf einfache Weise so vorgegeben werden kann, dass bei herkömmlichen Belastungssituationen sichergestellt ist, dass die Fahrzeugräder ohne Sturz beziehungsweise mit einem leicht positiven oder einem leicht negativen Sturz auf der Fahrbahndecke abrollen. Dadurch ergibt sich ein wesentlich homogeneres Verschleißbild des Reifenprofils. Ein weiterer Vorteil der erfindungsgemäßen Lösung ist darin zu sehen, dass weiter ein geringerer Rollwiderstand zur Verfügung gestellt wird, was ebenfalls zu geringerem Reifenverschleiß sowie zu einem geringeren Kraftstoffverbrauch führt.

Ein weiterer wesentlicher Vorteil der erfindungsgemäßen Lösung kann zudem darin gesehen werden, dass es in Verbindung mit angetriebenen ungelenkten Starrachsen zu einer wesentlich geringeren Biegewechselbelastung der Antriebswellen beziehungsweise Steckachsen kommt, als dies beim zuvor aufgezeigten Stand der Technik der Fall ist.

Diese erfindungsgemäßen Vorteile zeigen sich ferner insbesondere in Verbindung mit einer Bereifung, die durch Breitreifen oder eine Zwillingsbereifung gebildet ist. Insbesondere in Verbindung mit einer derartigen Bereifung kommt es hierbei zu einer Reduzierung und einer Homogenisierung des Riefenverschleißes an den Rädern.

Gemäß einer besonders bevorzugten konkreten Ausgestaltung ist vorgesehen, dass die ungelenkte Starrachse zur Ausbildung des positiven Radsturzwinkels mit einer die Fahrzeugräder im unbelasteten Zustand der Starrachse in den Konstruktionssturz vorspannenden, insbesondere elastisch vorspannenden Achsbrücke ausgebildet ist. Beispielsweise kann in diesem Zusammenhang vorgesehen sein, dass die Achsbrücke der ungelenkten Starrachse zur Ausbildung des positiven Radsturzwinkel so gestaltet, insbesondere so bombiert, ist, dass die Drehachsen der gegenüberliegenden Fahrzeugräder einander in einem definierten, insbesondere mittleren Achsbrückenbereich schneiden und einen Winkel von größer 0° zwischen sich einschließen. Alternativ oder zusätzlich können die starrachsenseitigen Radlagersitze so gefertigt werden, dass diese entsprechend einem definierten Radsturzwinkel gegen die Horizontale geneigt sind.

Die Erfindung wird nachfolgend anhand einer Zeichnung näher erläutert.

Es zeigen:
- Fig. 1: schematisch eine ungelenkte Starrachse gemäß dem Stand der Technik im unbe- lasteten Zustand,
- Fig. 2: schematisch die ungelenkte Starrachse gemäß dem Stand der Technik nach Fig. 1 im belasteten Zustand sowie im Fahrbetrieb,
- Fig. 3: schematisch eine Zwillingsbereifung gemäß dem Stand der Technik mit inhomoge- nem Riefenverschleiß,
- Fig. 4: schematisch eine erfindungsgemäße Achskonstruktion im unbelasteten Zustand, und
- Fig. 5: schematisch die erfindungsgemäße Achskonstruktion gemäß Fig. 4 im belasteten Zustand.

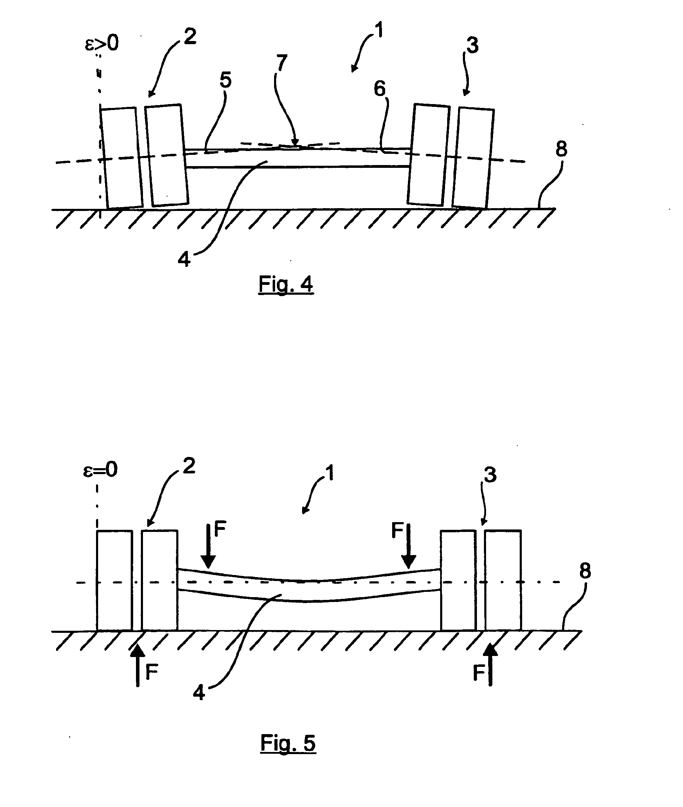

In der Fig. 4 ist schematisch eine erfindungsgemäße ungelenkte Starrachse 1 gezeigt, die so gefertigt ist, dass die hier durch jeweils eine Zwillingsbereifung gebildeten linksseitigen und rechtsseitigen Fahrzeugräder 2, 3 mit einem positiven Radsturzwinkel (ε > 0) an der Starrachse 1 angeordnet sind.

Um diesen positiven Radsturzwinkel auszubilden, ist eine Achsbrücke 4 der Starrachse 1 hier beispielhaft so bombiert, das heißt bezogen auf die Bildebene nach oben gewölbt, dass die Raddrehachsen 5, 6 der gegenüberliegenden Fahrzeugräder 2, 3 einander in einem mittleren Achsbrückenbereich 7 schneiden und dementsprechend zwischen sich einen Winkel von größer 0° einschließen. Alternativ oder zusätzlich hierzu kann, was jedoch nicht dargestellt ist, vorgesehen sein, dass die starrachsenseitigen Radlagersitze so gefertigt sind, dass diese entsprechend einem definierten Radsturzwinkel gegen die Horizontale geneigt sind.

Wird nun das Fahrzeug und damit die Starrachse 1 entsprechend der nach unten gerichteten Kraftpfeile F belastet, so wird die erfindungsgemäße Starrachse 1 so elastisch verformt, dass die Fahrzeugräder einen gegenüber dem positiven Radsturzwinkel der Fig. 4, die den unbelasteten Grundzustand darstellt, verringerten und in Richtung negativer Radsturzwinkel veränderten Radsturzwinkel angeordnet sind. Lediglich rein beispielhaft ist in der Darstellung der Fig. 5 ein Radsturzwinkel von ε = 0° gewählt worden.

Wie dies aus der schematischen Darstellung der Fig. 5 weiter ersichtlich ist, rollen dann in diesem Fall die zwillingsbereiften Fahrzeugräder 2, 3 dergestalt auf dem Fahrbahnbelag 8 ab, dass sich ein homogener Verschleiß an beiden Reifen der zwillingsbereiften Fahrzeugräder einstellt, wodurch eine längere Standzeit der Bereifung und ein geringerer Reifenverschleiß erzielt wird.

## Patentansprüche

1. Achskonstruktion an einem Fahrzeug, insbesondere an einem Nutzfahrzeug, mit einer die Fahrzeugräder (2, 3) mittelbar oder unmittelbar tragenden, ungelenkten Starrachse (1), wobei, die ungelenkte Starrachse (1) so ausgebildet ist, dass die Fahrzeugräder (2, 3) bei unbelasteter Starrachse (1) mit einem positiven Radsturzwinkel (Konstruktionssturz) an der Starrachse (1) angeordnet sind, wobei die am Fahrzeug montierte ungelenkte Starrachse (1) bei unbeladenem Fahrzeug so verformt ist, dass die Fahrzeugräder (2, 3) mit einem gegenüber dem Konstruktionssturz geringeren, aber nach wie vor positivem Radsturzwinkel (Grundsturz) an der ungelenkten Starrachse (1) angeordnet sind, **dadurch gekennzeichnet,**
**dass** die ungelenkte Starrachse (1) bei unbeladenem Fahrzeug so elastisch verformt ist, dass der Grundsturz durch einen positiven Radsturzwinkel von größer 0° bis 0,5° gebildet ist, und dass die ungelenkte Starrachse (1) bei einer maximal zulässigen Fahrzeugbeladung so elastisch verformt ist, dass die Fahrzeugräder (2, 3) mit einem gegenüber dem Grundsturz in Richtung negativer Radsturzwinkel verändertem Radsturzwinkel (Belastungssturz) von -0,3° bis 0° angeordnet sind, und
**dass** die ungelenkte Starrachse (1) als angetriebene Starrachse mit axialen Antriebswellen ausgebildet ist.

2. Achskonstruktion nach Anspruch 1, **dadurch gekennzeichnet, dass** der Konstruktionssturz durch einen positiven Radsturzwinkel von größer 0° bis 1°, höchst bevorzugt durch einen positiven Radsturzwinkel von größer 0° bis 0,5°, gebildet ist.

3. Achskonstruktion nach Anspruch 1 oder 2, **dadurch gekennzeichnet, dass** die ungelenkte Starrachse (1) zur Ausbildung des positiven Radsturzwinkels mit einer die Fahrzeugräder (2, 3) im unbelasteten Zustand der Starrachse (1) in den Konstruktionssturz vorspannenden, insbesondere elastisch vorspannenden Achsbrücke (4) ausgebildet ist.

4. Achskonstruktion nach Anspruch 3, **dadurch gekennzeichnet, dass** die Achsbrücke (4) der ungelenkten Starrachse (1) zur Ausbildung des positiven Radsturzwinkels so gestaltet, insbesondere bombiert ist, dass die Raddrehachsen (5, 6) der gegenüberliegenden Fahrzeugräder (2, 3) einander in einem definierten, insbesondere mittleren Achsbrückenbereich (7) schneiden und einen Winkel von größer 0° zwischen sich einschließen.

5. Achskonstruktion nach einem der Ansprüche 1 bis 4, **dadurch gekennzeichnet, dass** die starrachsenseitigen Radlagersitze so gefertigt sind, dass diese entsprechend einem definierten Radsturzwinkel gegen die Horizontale geneigt sind.

6. Achskonstruktion nach einem der Ansprüche 1 bis 5, **dadurch gekennzeichnet, dass** die Fahrzeugräder (2, 3) der ungelenkten Starrachse (1) durch eine breite Einzelbereifung oder durch eine Zwillingsbereifung gebildet sind.

## Claims

1. An axle construction on a vehicle, in particular on a commercial vehicle, with an unsteered rigid axle (1) indirectly or directly supporting the vehicle wheels (2, 3), wherein the unsteered rigid axle (1) is designed in such a manner that, when the rigid axle (1) is not subjected to a load, the vehicle wheels (2, 3) are arranged with a positive camber angle (construction camber) on the rigid axle (1), wherein, when the vehicle is unloaded, the unsteered rigid axle (1) mounted on the vehicle is deformed in such a manner that the vehicle wheels (2, 3) are arranged on the unsteered rigid axle (1) with a camber angle (basic camber) which is smaller than the construction camber but, as before, is positive, **characterized in that**, when the vehicle is unloaded, the unsteered rigid axle (1) is deformed elastically in such a manner that the basic camber is formed by a positive camber angle of greater than 0° to 0.5°, and **in that**, at a maximum permissible vehicle loading, the unsteered rigid axle (1) is elastically deformed in such a manner that the vehicle wheels (2, 3) are arranged with a camber angle (loading camber), which is changed in relation to the basic camber in the direction of negative camber angles, of -0.3° to 0°, and **in that** the unsteered rigid axle (1) is designed as a driven rigid axle with axial drive shafts.

2. The axle construction according to Claim 1, **characterized in that** the construction camber is formed by a positive camber angle of greater than 0° to 1°, and most preferably by a positive camber angle of greater than 0° to 0.5°.

3. The axle construction according to Claim 1 or 2, **characterized in that**, in order to form the positive camber angle, the unsteered rigid axle (1) is designed with an axle bridge (4) which prestresses, in particular elastically prestresses, the vehicle wheels (2, 3) into the construction camber in the unloaded state of the rigid axle (1).

4. The axle construction according to Claim 3, **characterized in that**, in order to form the positive camber angle, the axle bridge (4) of the unsteered rigid axle (1) is configured, in particular cambered, in such a manner that the wheel rotation axes (5, 6) of the opposite vehicle wheels (2, 3) intersect each other in a defined, in particular central, axle bridge region (7) and enclose an angle of greater than 0° between them.

5. The axle construction according to one of Claims 1 to 4, **characterized in that** the wheel bearing seats on the rigid-axle side are manufactured in such a manner that said wheel bearing seats are inclined in relation to the horizontal corresponding to a defined camber angle.

6. The axle construction according to one of Claims 1 to 5, **characterized in that** the vehicle wheels (2, 3) of the unsteered rigid axle (1) are formed by wide single tyres or by twin tyres.

## Revendications

1. Structure d'essieu sur un véhicule, notamment un véhicule utilitaire, comprenant un essieu rigide (1) non articulé, portant les roues du véhicule (2, 3) de manière directe ou indirecte, l'essieu rigide (1) non articulé étant réalisé de telle sorte que les roues du véhicule (2, 3), lorsque l'essieu rigide (1) n'est pas sollicité, soient disposées avec un angle de carrossage positif (carrossage de construction) sur l'essieu rigide (1), l'essieu rigide (1) non articulé monté sur le véhicule, lorsque le véhicule n'est pas chargé, étant déformé de telle sorte que les roues du véhicule (2, 3) soient disposées sur l'essieu rigide (1) non articulé avec un angle de carrossage (carrossage de base) plus petit par rapport au carrossage de construction, mais encore positif, **caractérisée en ce que**
l'essieu rigide (1) non articulé, lorsque le véhicule n'est pas chargé, est déformé élastiquement de telle sorte que le carrossage de base soit formé par un angle de carrossage positif entre plus de 0° et 0,5°, et **en ce que** l'essieu rigide (1) non articulé, dans le cas d'une charge maximale admissible du véhicule, est déformé élastiquement de telle sorte que les roues du véhicule (2, 3) soient disposées avec un angle de carrossage (carrossage de charge) de -0,3° à 0° modifié par rapport au carrossage de base dans la direction d'angles de carrossage négatifs, et
**en ce que** l'essieu rigide (1) non articulé est réalisé sous forme d'essieu rigide entraîné avec des arbres d'entraînement axiaux.

2. Structure d'essieu selon la revendication 1, **caractérisée en ce que** le carrossage de construction est formé par un angle de carrossage positif entre plus de 0° et 1°, plus préférablement par un angle de carrossage positif entre plus de 0° et 0,5°.

3. Structure d'essieu selon la revendication 1 ou 2, **caractérisée en ce que** l'essieu rigide (1) non articulé est réalisé, pour réaliser l'angle de carrossage positif, avec un pont d'essieu (4) précontraignant, notamment élastiquement, les roues du véhicule (2, 3) dans le carrossage de construction dans l'état non sollicité de l'essieu rigide (1).

4. Structure d'essieu selon la revendication 3, **caractérisée en ce que** le pont d'essieu (4) de l'essieu rigide (1) non articulé est configuré pour réaliser l'angle de carrossage positif, notamment est bombé, de telle sorte que les axes de rotation des roues (5,6) des roues du véhicule (2, 3) se faisant face se coupent mutuellement dans une plage de pont d'essieu (7) définie, notamment une plage moyenne, et forment entre eux un angle supérieur à 0°,

5. Structure d'essieu selon l'une quelconque des revendications 1 à 4, **caractérisée en ce que** les sièges de palier de roue du côté de l'essieu rigide sont fabriqués de telle sorte que ceux-ci soient inclinés par rapport à l'horizontale suivant un angle de carrossage défini.

6. Structure d'essieu selon l'une quelconque des revendications 1 à 5, **caractérisée en ce que** les roues du véhicule (2, 3) de l'essieu rigide (1) non articulé sont formées par des pneus individuels larges ou par des pneus jumelés.
